# EUROPÄISCHE PATENTSCHRIFT

(11) **EP 0 409 945 B1**
(45) Veröffentlichungstag und Bekanntmachung des Hinweises auf die Patenterteilung: **08.12.1993**
(21) Anmeldenummer: 90902226.1
(22) Anmeldetag: 06.02.1990
(51) Int. Cl.: B67D 5/06, B65D 90/30, B01D 53/04

(54) **VERFAHREN UND ANLAGE ZUR ENTSORGUNG DER GASRAUMINHALTE VON GROSSVOLUMIGEN BEHÄLTERN BEI UMWELTBELASTENDEN INHALTSSTOFFEN**
PROCESS AND DEVICE FOR EVACUATING THE CONTENT OF GAS SPACES OF LARGE CONTAINERS CONTAINING POLLUTANT SUBSTANCES
PROCEDE ET DISPOSITIF POUR EVACUER LE CONTENU DES ESPACES GAZEUX DE RESERVOIRS VOLUMINEUX COMPORTANT DES SUBSTANCES NOCIVES POUR L'ENVIRONNEMENT

(30) Priorität: 10.02.1989 DE 3903938
(43) Veröffentlichungstag der Anmeldung: 30.01.1991
(73) Patentinhaber: Weil, Peter, D-80809 München (DE)
(72) Erfinder: Weil, Peter, D-80809 München (DE)
(74) Vertreter: Patentanwälte Meinke, Dabringhaus und Partner
(86) Internationale Anmeldenummer: EP9000192
(87) Internationale Veröffentlichungsnummer: WO9009343

(56) Entgegenhaltungen:
- EP-A- 0 159 234
- EP-A- 0 198 988
- DE-A- 3 713 035
- US-A- 3 581 782
- US-A- 3 972 201

## Beschreibung

Die Erfindung richtet sich auf eine Anlage zur Entsorgung der Gasrauminhalte von großvolumigen Behältern, wie Tanks od. dgl., der im Oberbegriff des Anspruches 1 angegebenen Gattung.

Chemikalien werden häufig nicht nur in Tanks gelagert, sondern auch mittels Tankwagen befördert, d.h. vom Hersteller zum Verbraucher, vom Hersteller zu Zwischenlägern und von dort zum Verbraucher oder in anderer Weise, wobei die Betreiber derartiger Tankfahrzeuge darauf angewiesen sind, sehr unterschiedliche Produkte mit ihren Fahrzeugen zu transportieren. Wird nun ein derartiger Tank entleert, bilden sich in seinem Gasraum flüchtige Stoffe, häufig die Gasphase der entsprechenden Produkte, wobei diese Gasphase dann spätestens bei der Neubefüllung des Tankes entweicht. Dabei sieht es in der Praxis so aus, daß die Tanks während des Leertransportes häufig geöffnet werden, so daß die Umgebungsluft die schädliche Gasphase der Inhaltstoffe ausbläst, diese werden dann an die Umwelt abgegeben. Geschieht die Entleerung nicht vollständig, kann es vorkommen, daß bei Neubefüllung der Tanks das nachgefüllte Produkt mit der Gasphase des voraustransportierten Produktes eine gefährliche Verbindung eingeht, diese kann nicht nur toxisch sein, sondern z.B. auch hochexplosiv.

Umgekehrt treibt der einfließende Stoff in den zu befüllenden Tank die entsprechenden Gasvolumina aus diesem Tank aus, die dann, soll nicht gegen einen sich aufbauenden Gegendruck befüllt werden, entweichen müssen, wozu man z.B. bei dem Befüllen von Benzintanks das sogenannte Gaspendelverfahren einsetzt, d.h. das ausgetriebene Gasvolumen wird in den sich entleerenden Gasraum des Tankfahrzeuges übergeleitet, um Druckgleichheit zu gewährleisten. Dieses Gaspendelverfahren ist immer dann sinnvoll, solange ein einziger Stoff vom Tankfahrzeug befördert wird.

Wird jedoch ein Produktwechsel vorgenommen und dies ist der häufigste Fall, da kaum Transportbehälter immer für das gleiche Mittel benutzt werden, funktioniert das Gaspendelverfahren nicht mehr. Der gasförmige Stoff würde im Transportbehälter den neu zu transportierenden Stoff verunreinigen. Schlimmstenfalls kommt es zu chemischen Reaktionen (Explosionen). Aus diesem Grunde werden die Transportbehälter gespült bzw. neutralisiert, soweit es sich um wasserlösliche Bestandteile handelt. Bei organischen Lösemitteln ist dies meist nicht möglich, da diese häufig nicht wassermischbar sind. Außerdem entstehen dabei kontaminierte Wässer, die ihrerseits aufwendig und kostspielig entsorgt werden müssen.

So wird das kriminelle Handeln vorprogrammiert! Der Transporteur nimmt zwar beim Entleeren beim Kunden das Gaspendel in Anspruch, läßt jedoch unterwegs die Domdeckel geöffnet, um mit dem Fahrtwind den Tank zu entgasen. Dies ist aus Umweltschutzgründen strengstens untersagt. Es gibt aber keine brauchbare Lösung, da das Ausspülen mit Wasser meistens keinen Erfolg bringt. So kann es bei brennbaren Flüssigkeiten zu explosionsgefährlichen Luft/Gasgemischen kommen, die durch einen Funken zur Katastrophe führen können.

Das gezielte Befüllen des Gasraumes des sich entleerenden Tankes mit einem Ersatzstoff einerseits und das Entsorgen der Gasvolumina des sich füllenden Tankes über eine Kühlfalle andererseits hat den besonderen Vorteil, daß es für das sich entleerende Tankfahrzeug gleichgültig ist, ob ein Produktwechsel beim nächsten Einsatz vorgenommen wird oder nicht. Der Ersatzstoff macht das Betreiben der Tankfahrzeuge transportstoffunabhängig. Umgekehrt wird durch das Vorsehen einer Kühlfalle erreicht, daß das über die Kühlfalle geleitete, sich dann kondensierende Produkt dem Verbraucher wieder direkt zugeführt werden kann, so daß es bei den Mengenbilanzen auf der Seite des Verbrauchers zu keinen Fehlvolumina kommt. Wie im Gaspendelverfahren kann auch hier ohne Auftreten von Druckdifferenzen entleert und befüllt werden. Eine großtechnische Anlage mit Kühlfalle zeigt die oben schon erwähnte gattungsbildende EP-A-0 198 988.

Aus der DE-A-12 51 233 ist ein Verfahren bekannt, mit welchem großtechnisch Dämpfe zurückgewonnen werden können, wobei die Dämpfe über Kühlstufen geleitet werden. In welcher Art ggf. Volumina befüllt werden, wenn eine Rückgewinnung vorgenommen wird, ist dort nicht beschrieben, vielmehr handelt es sich aus der Gesamtoffenbarung um Umgebungsluft. Ein Benzindampfgemisch zurückzugewinnen zeigt auch die DE-A-23 37 055, bei der ebenfalls ein Benzin-Luftgemisch derart abgekühlt wird, daß die darin befindlichen Kohlenwasserstoffe auskondensieren bzw. ausfrieren. Aus der EP-A-0 159 234 ist eine weitere großtechnische Anlage mit Rückkühleinrichtung bekannt, die Möglichkeit, Absorptionen von ungewünschten Stoffen auch an einem Tankfahrzeug vorzusehen, zeigt die DE-A-37 13 035. Gasfilter zeigt die US-A-3 972 201, eine Rückführung von aus einem Fahrzeugtank auftretenden Gasen bei der Befüllung mit Treibstoff zeigt die US-A-3 581 782.

Aufgabe der Erfindung ist die Schaffung einer Lösung, mit der die Gasrauminhalte gerade bei häufigem Produktwechsel einfach entsorgt werden können, wobei die Lösung so getroffen werden soll, daß die zum Einsatz kommenden Einrichtungen und Geräte möglichst kleinvolumig und einfach zu handhaben sind, daß sie auch bei üblichen Tankfahrzeugen eingesetzt werden können, unabhängig davon, daß dies straßen- oder schienengebundene Fahrzeuge sind.

Ausgehend von einer Anlage, wie sie in der EP-A-0 198 988 beschrieben ist, wird diese Aufgabe gemäß der Erfindung dadurch gelöst, daß zur Behandlung von nichtkondensiertem, in die Umgebung abzugebenden Restgas eine Mehrzahl von getrennt aufschaltbaren Filtern für unterschiedliche Restgase vorgesehen sind.

In Ausgestaltung ist vorgesehen, daß die Kühlfalle mit Kondensatsammler und die getrennt aufschaltbaren Filter als integraler Bestandteil eines Tankfahrzeuges mit Vorratstank ausgebildet sind, womit eine besonders kompakte Bauweise erreicht wird.

Zweckmäßig ist ein Aktivkohlefilter vorgesehen für nichtkondensiertes Restgas, der ebenfalls integraler Bestandteil der erfindungsgemäßen Anlage sein kann.

Die Erfindung sieht auch eine Steuerungs- und Regeleinrichtung zur Vermeidung eines Druckunterschiedes zwischen den Gasräumen der Tanks vor, als weitere Sicherung gegen ungewünschtes Austreten von umweltgefährdenden Gasen in die Umgebung.

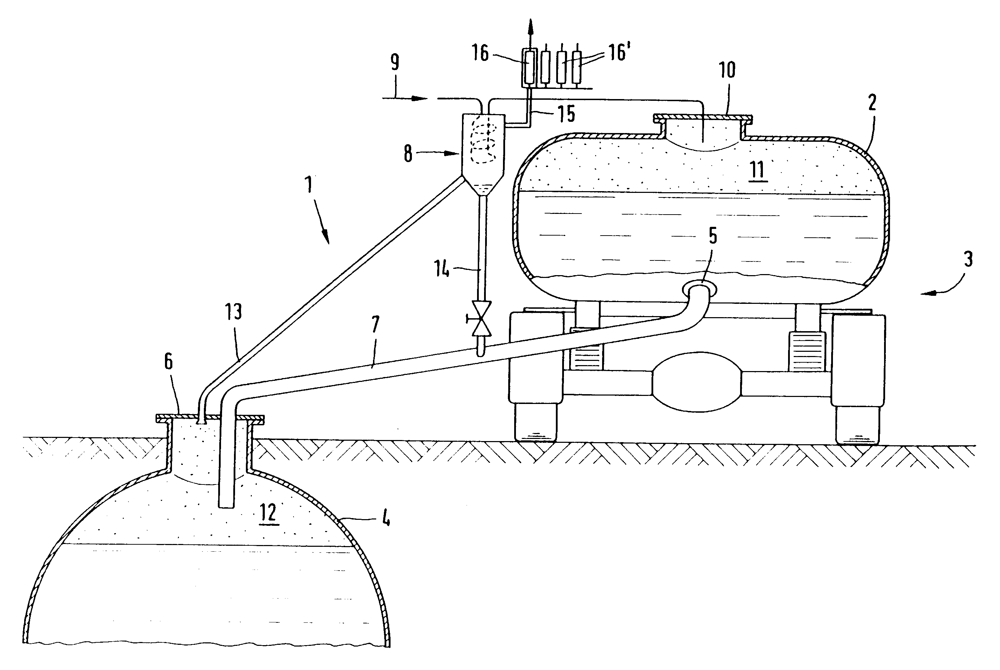

Die Erfindung ist nachstehend anhand der Zeichnung beispielsweise näher erläutert. Diese zeigt in der einzigen Figur ein Prinzipbild der erfindungsgemäßen Anlage.

Die allgemein mit 1 bezeichnete Anlage stellt im wesentlichen die Verbindung zwischen einem ersten Tank 2 eines Tankfahrzeuges 3 und einem zweiten Tank 4 dar, wobei der Auslaßstutzen 5 des Tankes 2 mit dem Einfüllstutzen 6 des Tankes 4 über eine Fülleitung 7 Verbunden ist.

Zusätzlich vorgesehen ist eine allgemein mit 8 bezeichnete Kühlfalle, deren schematisch Wiedergegebene Kühlschlangen mit flüssigem Stickstoff (N₂) durchströmt sind, was durch den Pfeil 9 angedeutet ist. Der sich in der Kühlfalle 8 aufheizende flüssige Stickstoff Vergast und tritt im Kopfbereich 10 in den mit 11 bezeichneten Gasraum des Tankes 2 bei dessen Entleerung ein.

Das im Gasraum 12 des zu befüllenden Tankes 4 entweichende Gas wird über eine Leitung 13 in den Kühlraum der Kühlfalle 8 geleitet, kondensiert dort und das so gewonnene Kondensat wird über eine Kondensatleitung 14 der Produktleitung 7 wieder zugeführt und fließt damit zurück in den Tank 4. Nicht kondensiertes Restgas wird über eine Leitung 15 an die Umgebung abgegeben, wobei noch ein Aktivkohlefilter 16 vorgesehen sein kann.

Die Steuerung und Regelung der Gesamtanlage wird dabei so vorgenommen, daß kein Druckunterschied zwischen den Gasräumen 11 und 12 der beiden Tanks 2 und 4 herrscht, d.h. der verdampfende Stickstoff kann entweder im Überschuß zugeführt werden, wenn größere Volumina benötigt werden als der Betrieb der Kühlfalle an sich notwendig hätte, er kann aber auch im Unterschuß betrieben werden, d.h. vergastes, im Gasraum 11 nicht benötigtes N₂ wird dann an die Umgebung abgegeben.

Angedeutet ist noch die mit 16' bezeichnete Möglichkeit, eine Vielzahl von Kartuschen mit unterschiedlichen Filterfüllungen je nach zu behandelndem Stoff vorzusehen, das nicht kondensierte Restgas tritt dann über die Leitung 15 in die jeweils notwendig werdende Kartusche 16 ein.

Natürlich ist das beschriebene Ausführungsbeispiel der Erfindung noch in vielfacher Hinsicht abzuändern, ohne den Grundgedanken zu verlassen. So ist die Erfindung nicht auf die hier nur schematisch wiedergegebene räumliche Anordnung der Kühlfalle 8 beschränkt, diese kann vor Ort als fest installiertes Bauteil im Bereich des Tankes 4 vorgesehen sein ebenso als integraler Bestandteil des Tankfahrzeuges 3 und dgl. mehr.

## Patentansprüche

1. Anlage zum Entsorgen der Gasrauminhalte (11 bzw. 12) von großvolumigen Behältern, wie Tanks (2 bzw. 4) od. dgl., bei Entleeren des einen Tanks (2) und Befüllen des anderen Tanks (4) mit Stoffen, deren Gasphase umweltbelastend, umweltschädigend oder als Wertstoff zurückzugewinnen ist, wobei der Gasinhalt des sich füllenden Tanks (4) zur Rückkondensierung über eine mit einem flüssigen Inertgas betriebene Kühlfalle (8) geleitet und der Gasraum (11) des sich entleerenden Tanks (2) mit in der Kühlfalle verdampftem Inertgas befüllt wird,
dadurch gekennzeichnet,
daß zur Behandlung von nichtkondensiertem, in die Umgebung abzugebenden Restgas eine Mehrzahl von getrennt aufschaltbaren Filtern (16) für unterschiedliche Restgase vorgesehen sind.

2. Anlage nach Anspruch 1,
dadurch gekennzeichnet,
daß die Kühlfalle (8) mit Kondensatsammler (14) und die getrennt aufschaltbaren Filter (16) als integraler Bestandteil eines Tankfahrzeuges (3) mit Vorratstank (2) ausgebildet sind.

3. Anlage nach Anspruch 1 oder 2,
gekennzeichnet durch
einen Aktivkohlefilter für nichtkondensiertes Restgas.

4. Anlage nach einem der vorangehenden Ansprüche,
gekennzeichnet durch
eine Steuerungs- und Regelungseinrichtung zur Vermeidung eines Druckunterschiedes zwischen den Gasräumen (11,12) der Tanks (2,4).

## Claims

1. An installation for disposing of the gas space contents (11, 12) of large-volume containers such as tanks (2, 4) or the like upon emptying of the one tank (2) and filling of the other tank (4) with substances of which the gas phase is environmentally polluting, environmentally harmful or is to be recovered as a valuable substance, wherein the gas content of the tank (4) being filled is passed for re-condensation by way of a cooling trap (8) operated with a liquid inert gas and the gas space (11) of the tank (2) being emptied is filled with inert gas which is evaporated in the cooling trap, characterised in that for the treatment of non-condensed residual gas which is to be discharged into the surrounding area there are provided a plurality of filters (16) which can be brought into operation separately for different residual gases.

2. An installation according to claim 1 characterised in that the cooling trap (8) with condensate collecting device (14) and the filters (16) which can be brought into operation separately are in the form of an integral component of a tanker vehicle (3) with storage tank (2).

3. An installation according to claim 1 or claim 2 characterised by an activated carbon filter for non-condensed residual gas.

4. An installation according to one of the preceding claims characterised by a control and regulating device for preventing a pressure difference between the gas spaces (11, 12) of the tanks (2, 4).

## Revendications

1. Installation pour évacuer le contenu des espaces gazeux (11 ou 12) de récipients volumineux tels que des réservoirs (2 ou 4) ou analogues, pendant le vidage de l'un (2) des réservoirs et le remplissage de l'autre (4) des réservoirs avec des produits dont la phase gazeuse, qui a une incidence sur l'environnement, est nocive pour l'environnement ou est une matière valable, est récupérée, le contenu en gaz du réservoir (4) qui se remplit étant dirigé en vue de sa recondensation par un piège cryogénique (8) utilisé avec un gaz inerte liquéfié, et l'espace gazeux (11) du réservoir (2) qui se vide étant rempli avec le gaz inerte vaporisé dans le piège cryogénique, caractérisée en ce que sont prévus pour le traitement du gaz résiduel non condensé et à envoyer dans l'environnement plusieurs filtres (16) insérables individuellement et destinés à des gaz résiduels différents.

2. Installation selon la revendication 1, caractérisée en ce que le piège cryogénique (8), le collecteur de condensat (14) et les filtres (16) insérables individuellement font partie intégrante d'un véhicule - citerne (3) comprenant un réservoir (2).

3. Installation selon la revendication 1 ou 2, caractérisée par un filtre à charbon actif pour le gaz résiduel non condensé.

4. Installation selon l'une quelconque des revendications précédentes, caractérisée par un dispositif de commande et de régulation pour éviter une différence de pression entre les espaces gazeux (11, 12) des réservoirs (2, 4).
